# EUROPÄISCHE PATENTANMELDUNG

(11) **EP 4 219 051 A1**
(43) Veröffentlichungstag der Anmeldung: **02.08.2023**
(21) Anmeldenummer: 23151649.3
(22) Anmeldetag: 16.01.2023
(51) Int. Cl.: B23B 31/08

(54) **SPANNFUTTER ZUM SPANNEN EINES GEWINDEWERKZEUGS IN EINER WERKZEUGMASCHINE**

(30) Priorität: 26.01.2022 DE 202022100438 U
(71) Anmelder: Eugen Fahrion GmbH & Co. KG, 73667 Kaiserbach (DE)
(72) Erfinder: FAHRION, Ulrich, 73667 Kaisersbach (DE); HÄGELE, Daniel, 73667 Kaisersbach (DE); CAVALARO, Salvatore, 73614 Schorndorf (DE)
(74) Vertreter: DREISS Patentanwälte PartG mbB

(57) **Zusammenfassung**

Die Erfindung betrifft ein Spannfutter (12) zum Spannen eines Gewindewerkzeugs (14) in einer Werkzeugmaschine, wobei das Spannfutter einen von einer Werkzeugmaschine antreibbaren Antriebsabschnitt (18) und einen Einspannabschnitt (20) zum Einspannen eines Schafts (26) des Gewindewerkzeugs (14) aufweist, wobei sich das Spannfutter entlang einer zentralen Spannfutterachse erstreckt, wobei der Antriebsabschnitt und der Einspannabschnitt voneinander separat bereitgestellt und mittels mindestens eines Kunststoffelements miteinander verbunden sind, das für eine Übertragung sowohl von parallel zu der Spannfutterachse wirkenden Axialkräften zwischen Antriebsabschnitt und Einspannabschnitt als auch für eine Übertragung von um die Spannfutterachse herum anliegenden Drehmomenten zwischen Antriebsabschnitt und Einspannabschnitt wirksam ist.

## Beschreibung

Die Erfindung betrifft ein Spannfutter zum Spannen eines Gewindewerkzeugs in einer Werkzeugmaschine, wobei das Spannfutter einen von einer Werkzeugmaschine antreibbaren Antriebsabschnitt und einen Einspannabschnitt zum Einspannen eines Schafts des Gewindewerkzeugs aufweist, wobei sich das Spannfutter entlang einer zentralen Spannfutterachse erstreckt.

Spannfutter der vorstehend genannten Art werden maschinenseitig sowohl in Drehrichtung als auch - der Steigung des Gewindes des Gewindewerkzeugs entsprechend - in Axialrichtung angetrieben, um ein Gewinde in ein Werkstück einschneiden oder einformen zu können. Der Antrieb des Gewindewerkzeugs in Axialrichtung erfolgt zunächst entlang eines Vorschubs, wobei das Gewindewerkzeug in einer ersten Drehrichtung angetrieben ist. Nach Fertigstellung des Gewindes erfolgt eine Drehrichtungsumkehr und der Rückhub des Gewindewerkzeugs.

Während des Eingriffs des Gewindewerkzeugs in das Werkstück wirken Zug- und Druckkräfte auf das Gewindewerkzeug, wobei diese Kräfte möglichst gering zu halten sind, aber von einer Vielzahl von Faktoren beeinflusst sind. Diese Faktoren sind bspw. die verfügbare Rechnerleistung der Werkzeugmaschine (Differenz zwischen Soll-/Ist-Position), thermische Effekte (Wärmeausdehnung des Gewindewerkzeugs und somit des Abstandes der Gewindeflanken), Trägheitseffekte (Beschleunigung und Abbremsen der massebehafteten Maschinenspindel, insbesondere bei kleinen Nenngrößen wie z.B. M3), sowie Verschleiß (Steigungsfehler am Gewindewerkzeug, Maschinenkomponenten usw.).

In der Phase der Drehrichtungsumkehr wirken besonders hohe Kräfte auf das Gewindewerkzeug, das insbesondere bei kleinen Nenndurchmessern schnell verschleißen oder brechen kann. Zusätzlich besteht das Problem, dass sich während des Rückhubs des Gewindewerkzeugs die Oberflächenqualität des frisch hergestellten Gewindes des Werkstücks potentiell verschlechtert.

Für die Herstellung eines Gewindes mit einer hohen Oberflächenqualität ist anzustreben, dass das Gewindewerkzeug auch unter Drehmomentlast auch eine axiale Leichtgängigkeit beibehält. Die Drehmomentübertragung trägt aber ihrerseits zu einer potentiellen Erhöhung der unerwünschten Zug- und Druckkräfte bei.

Der vorliegenden Erfindung liegt die Aufgabe zugrunde, Spannfutter bereitzustellen, welche die vorstehenden Nachteile möglichst weitgehend vermeiden. Idealerweise soll das Spannfutter auch möglichst einfach herstellbar sein.

Diese Aufgaben wird bei einem Spannfutter der eingangs genannten Art dadurch gelöst, dass der Antriebsabschnitt und der Einspannabschnitt voneinander separat bereitgestellt und mittels mindestens eines Kunststoffelements miteinander verbunden sind, das für eine Übertragung sowohl von parallel zu der Spannfutterachse wirkenden Axialkräften zwischen Antriebsabschnitt und Einspannabschnitt als auch für eine Übertragung von um die Spannfutterachse herum anliegenden Drehmomenten zwischen Antriebsabschnitt und Einspannabschnitt wirksam ist.

Das erfindungsgemäße Spannfutter weist einen Materialabschnitt aus Kunststoff auf, der sowohl Axialkräfte als auch Drehmomente von dem Antriebsabschnitt auf den Einspannabschnitt überträgt. Das Kunststoffelement schafft einen Materialbereich, der im Vergleich zu den übrigen Abschnitten des Spannfutters, also im Vergleich zu dem aus Metall hergestellten Antriebsabschnitt und zu dem aus Metall hergestellten Einspannabschnitt, leichter verformbar ist, gleichwohl ausreichend stabil ist, um Axialkräfte und Drehmomente von dem Antriebsabschnitt auf den Einspannabschnitt übertragen zu können.

Insbesondere ist es bevorzugt, dass eine Übertragung der Axialkräfte und der Drehmomente von dem Antriebsabschnitt auf den Einspannabschnitt ausschließlich durch das mindestens eine Kunststoffelement hindurch erfolgt. Dies bedeutet für den Normalbetrieb des Spannfutters, dass ein Entfernen des mindestens eine Kunststoffelements zu einer Unterbrechung des Kraftflusses zwischen dem Antriebsabschnitt und dem Einspannabschnitt führen würde, dass also keine Kraft- und Drehmomentübertragung stattfinden würde.

Das mindestens eine Kunststoffelement kann aus einem thermoplastischen oder aus einem duroplastischen Material hergestellt sein. Insbesondere ist das Kunststoffelement aus einem Elastomer hergestellt. Es ist möglich, dass das Kunststoffelement faserverstärkt ist.

Vorzugsweise ist das mindestens eine Kunststoffelement ringförmig. Dies ermöglicht eine Übertragung von Axialkräften durch den Querschnitt des Kunststoffelements hindurch und die Übertragung von Drehmomenten innerhalb einer Scherebene, welche sich ebenfalls über dem gesamten Umfang des Kunststoffelements erstreckt.

Besonders bevorzugt ist das Kunststoffelement hohlzylindrisch, wobei eine Übertragung der Axialkraft mit einer Stauchung des Kunststoffelements parallel zu einer (gedachten) zentralen Achse des Kunststoffelements einhergehen kann und eine Übertragung von Drehmomenten mit einer Torsion des Kunststoffelements um die (gedachte) zentrale Achse herum.

Bei einer bevorzugten Ausführungsform erstreckt sich eine zentrale Achse des mindestens einen Kunststoffelements koaxial zu der Spannfutterachse. Diese Anordnung ist insbesondere bevorzugt, wenn das Spannfutter nur ein einziges Kunststoffelement aufweist.

Es ist aber auch möglich, dass zur Übertragung der Axialkräfte und der Drehmomente mehrere Kunststoffelemente vorgesehen sind, welche vorzugsweise entlang eines Teilkreises um die Spannfutterachse verteilt angeordnet sind, insbesondere regelmäßig verteilt angeordnet sind. Es ist bevorzugt, dass mindestens drei Kunststoffelemente vorgesehen sind, welche massiv ausgebildet sein können, beispielsweise in Form von Kugeln oder Würfeln, oder aber bspw. ringförmig ausgebildet sein können, insbesondere hohlzylindrisch. Die Verwendung mehrerer Kunststoffelemente ermöglicht eine vergleichsweise kompakte Dimensionierung der Kunststoffelemente.

Zur Verbindung des mindestens einen Kunststoffelements mit dem Antriebsabschnitt oder mit dem Einspannabschnitt wird vorgeschlagen, dass das mindestens eine Kunststoffelement eine Verbindungsfläche zur Verbindung mit einer ersten Metallschicht aufweist, welche mit dem Antriebsabschnitt oder mit dem Einspannabschnitt verbunden ist. Eine solche Metallschicht kann beispielsweise hülsenförmig sein und bezogen auf ein ringförmiges Kunststoffelement radial innen oder radial außen angeordnet sein.

Das mindestens eine Kunststoffelement kann eine zweite Verbindungsfläche zur Verbindung mit einer zweiten Metallschicht aufweisen, welche dann ihrerseits mit dem Einspannabschnitt oder mit dem Antriebsabschnitt verbunden ist.

Eine Verbindung des mindestens einen Kunststoffelements zu der genannten ersten Metallschicht und/oder zu der genannten zweiten Metallschicht kann insbesondere durch Vulkanisation hergestellt sein, wodurch eine besonders stabile und stoffschlüssige Verbindung zwischen dem Kunststoffmaterial des Kunststoffelements und den Metallschichten herstellbar ist.

Für eine Verbindung zwischen einer der genannten Metallschichten einerseits und dem Antriebsabschnitt oder dem Einspannabschnitt andererseits ist eine Kleb- oder Pressverbindung bevorzugt, welchen einen dauerfesten Betrieb des Spannfutters ermöglicht.

Es ist auch möglich, den Antriebsabschnitt und das Kunststoffelement unmittelbar miteinander (also ohne Zwischenschaltung einer Metallschicht) durch Vulkanisation, Kleben oder Pressen zu verbinden. Zusätzlich oder alternativ hierzu ist es möglich, das Kunststoffelement und den Einspannabschnitt unmittelbar miteinander (also ohne Zwischenschaltung einer Metallschicht) durch Vulkanisation, Kleben oder Pressen zu verbinden.

Es ist möglich, dass die Materialauswahl des Kunststoffelements und dessen Dimensionierung für unterschiedlich große Gewindewerkzeuge voneinander abweichen kann. Es ist aber in jedem Fall bevorzugt, dass ein Normalbetrieb des Spannfutters damit korreliert, dass das mindestens eine Kunststoffelement bei Übertragung von Axialkräften und Drehmomenten ausschließlich elastisch verformt wird. Dies bedeutet, dass sich das Kunststoffelement während der Herstellung eines Gewindes nur elastisch verformt, aber nicht plastisch verformt wird.

Insbesondere korreliert der Normalbetrieb mit der Übertragung von Drehmomenten bis zu einem vorgegebenen ersten maximalen Grenzdrehmoment, das beispielsweise bei der Herstellung eines Gewindes mit einem ersten maximalen Nenndurchmessers auftritt.

Zur Vermeidung einer plastischen Verformung des Kunststoffelements bei Überlast wird vorgeschlagen, dass eine Überlasteinrichtung vorgesehen ist, welche in dem Normalbetrieb des Spannfutters inaktiv ist und erst bei Überschreitung eines vorgegebenen maximalen Verformungswegs des mindestens einen Kunststoffelements und/oder bei Überschreitung des ersten maximalen Grenzdrehmoments aktivierbar ist und - dem maximal verformten Kunststoffelement überlagert - einen zusätzlichen Übertragungsweg zur Übertragung einer Axialkraft und/oder eins Drehmoments zwischen Antriebsabschnitt und Einspannabschnitt bereitstellt. Eine solche Überlasteinrichtung umfasst beispielsweise metallische Übertragungselemente, welche während des Normalbetriebs - zumindest bis zu dem vorgegebenen ersten maximalen Grenzdrehmoment - des Spannfutters nicht für die Bereitstellung des zusätzlichen Übertragungswegs genutzt werden, also für die Herstellung eines Gewindes funktionslos oder zumindest zunächst funktionslos sind.

Bei einer Blockade eines Gewindewerkzeugs in einem Werkstück verhindern die Überlasteinrichtung eine plastische Verformung oder Zerstörung des mindestens einen Kunststoffelements. Dabei überträgt der zusätzliche Übertragungsweg diejenigen Kraft-und Drehmomentanteile, welche bei Einwirkung auf das mindestens eine Kunststoffelement über dessen maximal zulässige elastische Verformung hinausgehend zu einer plastischen Verformung oder Zerstörung des Kunststoffelements führen würden.

Die Überlasteinrichtung weist beispielsweise mindestens eine dem Antriebsabschnitt zugeordnete Übertragungsfläche und mindestens eine dem Einspannabschnitt zugeordnete Übertragungsfläche auf, welche im Normalbetrieb zueinander beabstandet sind und welche erst bei Überschreitung des vorgegebenen maximalen Verformungswegs des mindestens einen Kunststoffelements in eine kraftschlüssige Anlage miteinander gelangen. Anders ausgedrückt: im Normalbetrieb wird ein Spiel zwischen den Übertragungsflächen bereitgehalten; eine Übertragung von Kräften oder Drehmomenten erfolgt erst, wenn bei maximal zulässiger elastischer Verformung des mindestens einen Kunststoffelements die Übertragungsflächen miteinander in Anlage gelangt sind.

Die Überlasteinrichtung weist beispielsweise mindestens einen Übertragungskörper auf, der im Normalbetrieb zu einer Antriebsfläche und/oder zu einer Abtriebsfläche beabstandet ist und der erst bei Überschreitung des vorgegeben maximalen Verformungswegs des mindestens ein Kunststoffelements in eine kraftschlüssige Anlage mit der Antriebsfläche und mit der Abtriebsfläche gelangt. Bei dem Übertragungskörper kann es sich beispielsweise um einen Kugelkörper handeln, der im Normalbetrieb des Spannfutters mit Spiel zu der Antriebsfläche und/oder der Abtriebsfläche beabstandet ist, wobei das Spiel erst dann vollständig aufgebraucht ist, wenn das mindestens eine Kunststoffelement sich über den vorgegeben, maximalen Verformungsweg hinweg verformt hat. Es ist möglich, dass der mindestens eine Übertragungskörper aus einem metallischen Material hergestellt ist.

Es ist auch möglich, dass der mindestens eine Übertragungskörper aus einem Kunststoffmaterial hergestellt ist oder zumindest einen Kunststoffmaterialabschnitt aufweist.Dies ermöglicht es, die Überlasteinrichtung als eine dem Kunststoffelement (das einer gedachten "ersten Stufe" zugeordnet ist), nachgeschaltete "zweite Stufe" zu verwenden, welche ihrerseits in der Lage ist, elastisch nachgiebig Axialkräfte und/oder Drehmomente zu übertragen.

Zur Bereitstellung einer "dritten Stufe" ist es möglich, dass der mindestens eine Übertragungskörper bis zu einem vorgebbaren maximalen zweiten Grenzdrehmoment elastisch verformbar ist und dass der Überlasteinrichtung eine Übertragungseinrichtung nachgeschaltet ist, welche bei Überschreitung des maximalen zweiten Grenzdrehmoments zur Übertragung eines Drehmoments von dem Antriebsabschnitt auf den Einspannabschnitt wirksam ist. Sofern diese "dritten Stufe" abschließend ist, ist es bevorzugt, dass der Übertragungseinrichtung zugeordnete Übertragungselemente nicht elastisch nachgiebig sind und vorzugsweise aus Metall hergestellt sind. Andernfalls können eine "vierte Stufe" und ggf. weitere Folgestufen vorgesehen sein.

Der Verformungsweg des Kunststoffelements betrifft eine zu der Spannfutterachse parallele Axialverformung und/oder eine Verdrehverformung des mindestens einen Kunststoffelements. Es ist möglich, dass zur Begrenzung der Axialverformung des mindestens einen Kunststoffelements eine erste Überlasteinrichtung und dass zur Begrenzung einer Verdrehverformung des mindestens einen Kunststoffelements eine zweite Überlasteinrichtung bereitgestellt ist.

Besonders bevorzugt ist es ferner, wenn der Antriebsabschnitt einen nach radial innen weisenden Führungsabschnitt zur Führung eines nach radial außen weisenden Führungsabschnitts des Einspannabschnitts aufweist. Dies ermöglicht eine genaue Positionierung des Einspannabschnitts relativ zu dem Antriebsabschnitts, vorzugweise bezogen auf die zentrale Spannfutterachse zueinander konzentrisch.

Die Erfindung betrifft ferner ein Werkzeugsystem, welches ein vorstehend beschriebenes Spannfutter und ein Gewindewerkzeug umfasst.

Weitere Merkmale und Vorteile der Erfindung sind Gegenstand der nachfolgenden Beschreibung und der zeichnerischen Darstellung von Ausführungsbeispielen.

In der Zeichnung zeigt
- Fig. 1: eine Explosionsdarstellung einer Ausführungsform eines Werkzeugsystems mit einem Spannfutter und mit einem Gewindewerkzeug;
- Fig. 2: eine perspektivische Ansicht des Werkzeugsystems gemäß Fig. 1;
- Fig. 3: eine Seitenansicht längs einer vertikalen Schnittebene des Werkzeugsystems gemäß Fig. 1;
- Fig. 4: eine Vorderansicht des Werkzeugsystems gemäß Fig. 1 längs einer in Fig. 3 mit IV - IV bezeichneten Schnittebene;
- Fig. 5a und 5b: Vorderansichten des Werkzeugsystems gemäß Fig. 1 längs einer in Fig. 3 mit V - V bezeichneten Schnittebene;
- Fig. 6a, 7a und 8a: Vorderansichten von Baugruppen mit Kunststoffelementen zur Verwendung bei einem Spannfutter gemäß Fig. 1;
- Fig. 6b, 7b und 8b;: Vertikalschnitte der Baugruppen gemäß Fig. 6a, 7a, 8a;
- Fig. 9: eine der Fig. 3 entsprechende Ansicht eines Werkzeugsystems mit einer alternativ ausgebildeten Überlasteinrichtung;
- Fig. 10: eine der Fig. 5a entsprechende Ansicht einer alternativ ausgebildeten Überlasteinrichtung;
- Fig. 11: eine der Fig. 3 entsprechende Ansicht eines Werkzeugsystems mit einer alternativ ausgebildeten Überlasteinrichtung;
- Fig. 12: eine Vorderansicht des Werkzeugsystems gemäß Fig. 11 längs einer in Fig. 11 mit XII - XII bezeichneten Schnittebene;
- Fig. 13: einen in Fig. 11 mit XIII bezeichneten Ausschnitt in vergrößerter Darstellung;
- Fig. 14: eine der Fig. 3 entsprechende Ansicht eines Werkzeugsystems mit einer Mehrzahl von Kunststoffelementen; und
- Fig. 15: eine Vorderansicht des Werkzeugsystems gemäß Fig. 14 längs einer in Fig. 11 mit XV - XV bezeichneten Schnittebene.

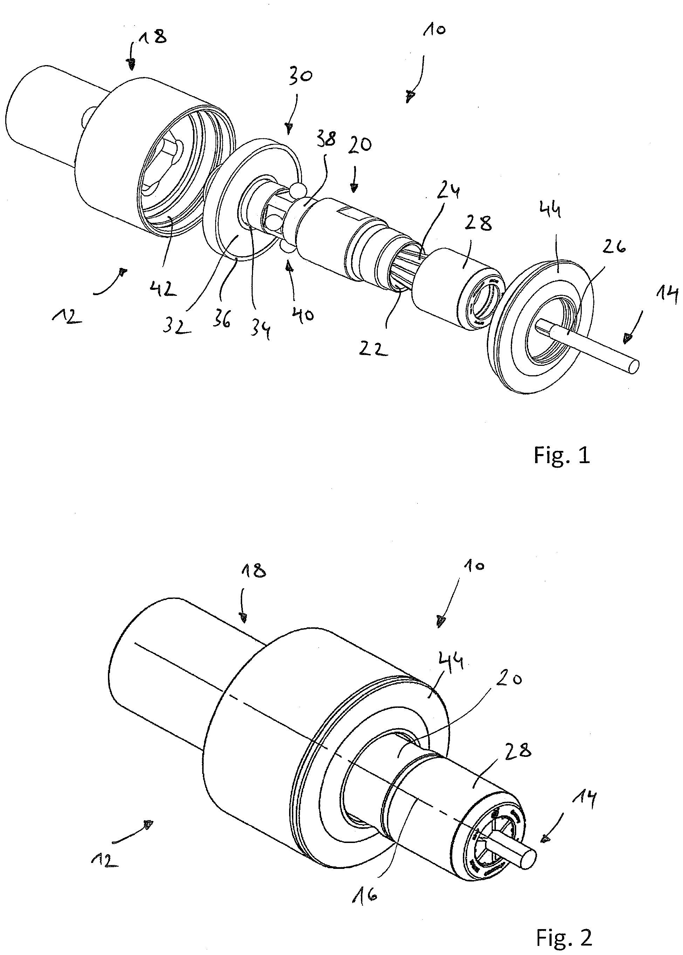

Ein Werkzeugsystem ist in Figur 1 insgesamt mit dem Bezugszeichen 10 bezeichnet. Es umfasst ein mehrteiliges Spannfutter 12 und ein Gewindewerkzeug 14.

Das Spannfutter 12 erstreckt sich entlang einer zentralen Spannfutterachse 16, vgl. Figur 2.

Das Werkzeugsystem 10 weist auf der dem Gewindewerkzeug 14 abgewandten Seite einen Antriebsabschnitt 18 auf, der mit einem Antrieb einer Werkzeugmaschine verbindbar ist und einen Antrieb des Spannfutter 12 und des Gewindewerkzeugs 14 in einer Axialrichtung, parallel zu der Spannfutterachse 16, ermöglicht und eine Übertragung einer Drehbewegung, welche von der Werkzeugmaschine erzeugt und über das Spannfutter 12 auf das Gewindewerkzeug 14 übertragen wird.

Zum Einspannen des Gewindewerkzeugs 14 weist das Spannfutter 12 einen Einspannabschnitt 20 auf, der bei einer von der Zeichnung abweichenden Ausführungsform zur unmittelbaren Einspannung des Gewindewerkzeugs 14 dienen kann. Bei der in der Zeichnung dargestellten Ausführungsform weist der Einspannabschnitt 20 eine Spannzangenaufnahme 22 zur Aufnahme einer Spannzange 24 auf, welche zur Verspannung mit einem Schaftabschnitt 26 des Gewindewerkzeugs 14 dient, wobei zur Verbindung der Spannzange 24 mit dem Einspannabschnitt 20 eine Spannmutter 28 vorgesehen ist.

Das Spannfutter 12 weist ferner eine insgesamt scheibenförmige Baugruppe 30 auf, mit einem hohlzylindrischen Kunststoffelement 32, das insbesondere aus einem Elastomermaterial hergestellt ist.

Die Baugruppe 30 weist bezogen auf das Kunststoffelement 32 radial innen eine erste, hülsenförmige Metallschicht 34 und bezogen auf das Kunststoffelement 32 radial außen eine zweite, hülsenförmige Metallschicht 36 auf.

Die erste Metallschicht 34 dient zur drehfesten Verbindung mit einem zylindrischen Abschnitt 38 des Einspannabschnitts 20, wobei die erste Metallschicht 34 beispielsweise auf den zylindrischen Abschnitt 38 aufgepresst ist.

Die zweite Metallschicht 36 dient zur drehfesten Verbindung mit einem hohlzylindrischen Abschnitt 42 des Antriebsabschnitts 18, wobei die zweite Metallschicht 36 beispielsweise in den hohlzylindrischen Abschnitt 42 eingepresst ist.

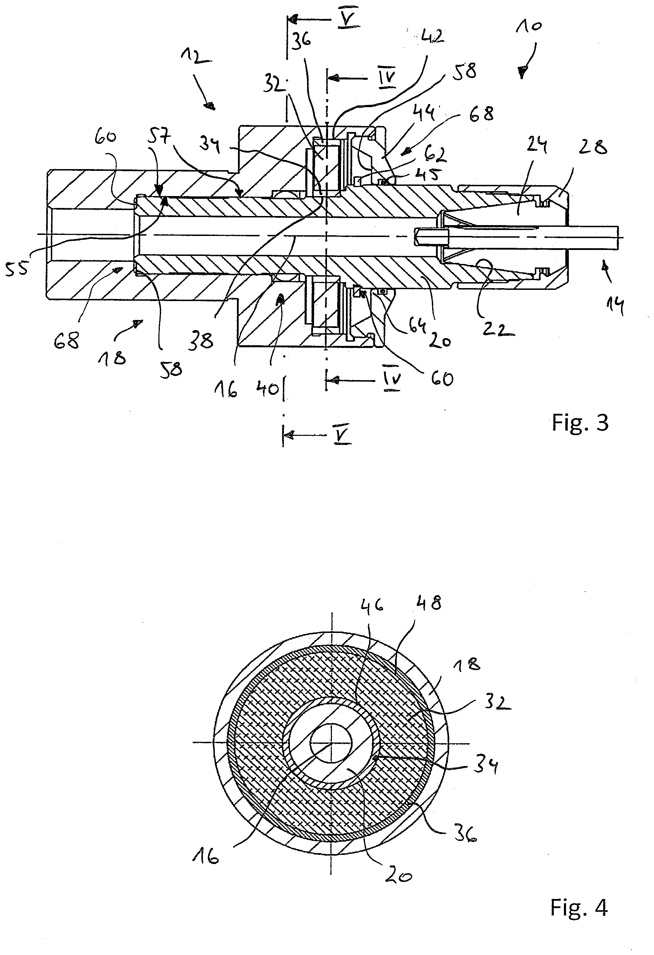

Das Spannfutter 12 weist ferner eine erste Überlasteinrichtung 40 auf, welche bei Überschreitung einer maximalen Verdrehverformung des Kunststoffelements 32 aktivierbar ist, wobei die maximale Verdrehverformung mit einer noch elastischen Verformung des Kunststoffelements 32 einhergeht. Zum Schutz der Baugruppe 30 gegen Gewindespäne und Betriebsmedien weist das Spannfutter 12 eine mit dem Antriebsabschnitt 18 verbundene ringförmige Abdeckung 44 auf. Die Abdeckung 44 dient auch zur Zentrierung und Führung des Einspannabschnitts 20 relativ zu dem Antriebsabschnitt 18, beispielsweise unter Verwendung einer Dichtung 45, vgl. Fig. 3. Es ist zusätzlich oder alternativ hierzu auch möglich, dass der Einspannabschnitt 20 ohne Zwischenschaltung einer Abdeckung 44 an dem Antriebsabschnitt 18 zentriert und geführt ist, beispielsweise unter Verwendung einer zwischen dem Einspannabschnitt 20 und dem Antriebsabschnitt 18 wirksamen Dichtung.

Der weitere Aufbau des Spannfutters 12 wird nachfolgend unter Bezugnahme auf Figuren 3 und 4 erläutert.

Im Normalbetrieb des Spannfutters 12 erfolgt eine Übertragung sowohl von Axialkräften als auch von Drehmomenten von dem Antriebsabschnitt 18 auf den Einspannabschnitt 20 unter ausschließlicher Nutzung des Kunststoffmaterials des Kunststoffelements 32. Bei Übertragung eines Drehmoments von dem Antriebsabschnitt 18 auf den Einspannabschnitt 20 wird ein Drehmoment von dem Antriebsabschnitt 18 über die zweite Metallschicht 36 in das Kunststoffelement 32 eingeleitet und von dort über die erste Metallschicht 34 auf den Antriebsabschnitt 20 übertragen.

Eine Übertragung des Drehmoments mittels des Kunststoffelements 32 bewirkt eine relative Verdrehung zwischen einer radial inneren Verbindungsfläche 46 zu der ersten Metallschicht 34 und einer radial äußeren Verbindungsfläche 48 zu der zweiten Metallschicht 36. Das zwischen diesen Verbindungsflächen 46 und 48 angeordnete Material des Kunststoffelements ist also auf Torsion beansprucht.

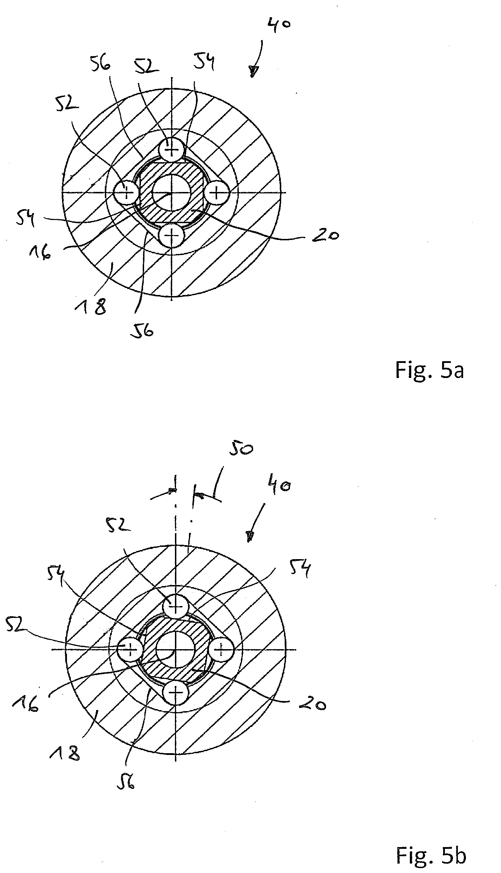

Die erste Überlasteinrichtung 40 (vgl. Fig. 5a und 5b) weist eine Mehrzahl von bspw. kugelförmigen Übertragungskörpern 52 auf, welche bspw. regelmäßig um die Spannfutterachse 16 verteilt angeordnet sind. Die Übertragungskörper 52 sind zwischen Antriebsflächen 56 des Antriebsabschnitts 18 und Abtriebsflächen 54 des Einspannabschnitts 20 angeordnet.

Die vorstehend unter Bezugnahme auf das mindestens eine Kunststoffelement 32 erörterte relative Verdrehung liegt auch zwischen dem Antriebsabschnitt 18 und dem Einspannabschnitt 20 an. Insbesondere liegt die relative Verdrehung auch an zwischen mindestens einem nach nach radial innen weisenden Führungsabschnitt 55 des Antriebsabschnitts 18 und mindestens einem nach radial außen weisenden Führungsabschnitt 57 des Einspannabschnitts 20.

Ausgehend von einer Relativverdrehung von 0 Grad (vgl. Figur 5a, keine Drehmomentübertragung) bewirkt die Übertragung eines nicht zu hohen Drehmoments eine relative Verdrehung zwischen dem Antriebsabschnitt 18 und dem Einspannabschnitt 20 um einen Winkel, um welchen auch das Kunststoffelement 32 in sich verdreht / tordiert wird, wobei aber das Kunststoffelement 32 nur elastisch verformt wird. Eine plastische Verformung des Kunststoffelements 32 erfolgt beispielsweise bei einem Verdrehwinkel von 10 Grad.

Die erste Überlasteinrichtung 40 verhindert, dass das Kunststoffelement in den Bereich einer plastischen Verformung gelangt. Beispielsweise bewirkt ein zu hohes Drehmoment eine Relativverdrehung um einen maximalen Winkel 50 von beispielsweise 9 Grad, vergleiche Figur 5b. Dies führt dazu, dass ein Übertragungskörper 52 nicht mehr mit Spiel beabstandet zu einer der Antriebsflächen 56 und/oder zu einer der Abtriebsflächen 54 angeordnet ist (Zustand gemäß Figur 5a), sondern in kraftschlüssiger Anlage mit einer der Antriebsfläche 56 und mit einer der Abtriebsflächen 54 steht (Zustand gemäß Figur 5b).

Anders ausgedrückt: In dem aktivierten Zustand der ersten Überlasteinrichtung 40 wird ein Drehmoment nicht nur über das Kunststoffelement 32 hinweg übertragen, sondern zusätzlich entlang eines zusätzlichen Übertragungswegs, der von dem Antriebsabschnitt 18 ausgehend über dessen Antriebsfläche 56 auf einen Übertragungskörper 52 und von diesem auf eine Abtriebsfläche 54 des Einspannabschnitts 20 verläuft.

Das Spannfutter 12 weist eine zweite Überlasteinrichtung 68 auf, welche dazu dient, für den Fall der Überschreitung eines vorgegebenen maximalen axialen Verformungswegs des mindestens einen Kunststoffelements 32 einen zusätzlichen Übertragungsweg bereitzustellen.

Der Einspannabschnitt 20 weist beispielsweise an seinem dem Gewindewerkzeug 14 abgewandten stirnseitigen Ende eine Übertragungsfläche 58 auf, welche im Normalbetrieb des Spannfutters 12 zu einer Übertragungsfläche 60 des Antriebsabschnitts 18 beabstandet ist.

Für den Fall, dass auf dem Kunststoffelement 32 ein zu hoher Druck lastet, verformt sich das Kunststoffelement 32 derart, dass die Übertragungsfläche 58 in Anschlag mit der Übertragungsfläche 60 gelangt, sodass eine zusätzliche Schubbelastung des Kunststoffelements 32 in einer zu der Spannfutterachse 16 parallelen Richtung verhindert wird.

Der Einspannabschnitt 20 weist ferner einen Ring 62 auf, der in einem Normalbetrieb des Spannfutters 12 zu einem ringförmigen Anschlag 64 der Abdeckung 44 beabstandet ist. Der Ring 62 und der Anschlag 64 weisen einander zugewandte Übertragungsflächen 58 und 60 auf. Für den Fall, dass auf dem Kunststoffelement 32 eine zu hohe Zugkraft ausgeübt wird, beispielsweise bei einem ruckartigen Rückhub des Gewindewerkzeugs 14 aus einem Werkstück, gelangen die Übertragungsflächen 58 und 60 in Anlage miteinander, sodass eine weitere Erhöhung der Schubbelastung des Kunststoffelements 32 vermieden wird.

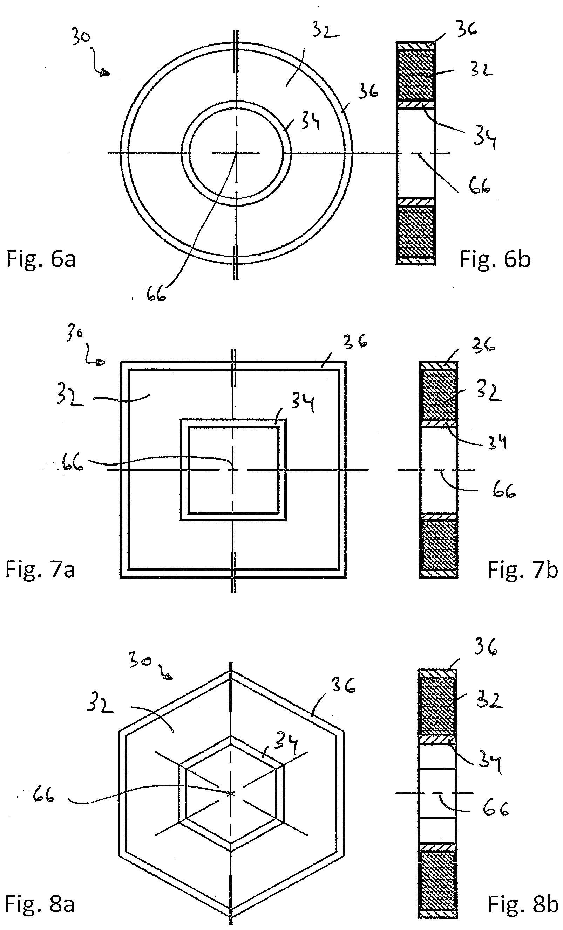

Das Kunststoffelements 32 weist eine zentrale Achse 66 auf, vergleiche Figur 6b, welche sich bei dem Spannfutter 12 gemäß Figuren 1 bis 5b koaxial zu der zentralen Spannfutterachse 16 erstreckt. Anstelle einer rotationssymmetrischen Anordnung gemäß Figuren 1 bis 6b ist es auch möglich, Baugruppen 30 mit Kunststoffelementen 32 zu verwenden, welche zwar umfangsseitig geschlossen, jedoch nicht rotationssymmetrisch sind, beispielsweise einen mehreckigen verlauf mit vier Ecken (vergleiche Figur 7a und 7b) oder mit sechs Ecken (vergleiche Figuren 8a und 8b) aufweisen.

Auch für mehreckige Anordnungen ist es bevorzugt, wenn die jeweils zentrale Achse 66 des Kunststoffelement 32 koaxial zu der zentralen Spannfutterachse 16 des Spannfutters 12 verläuft.

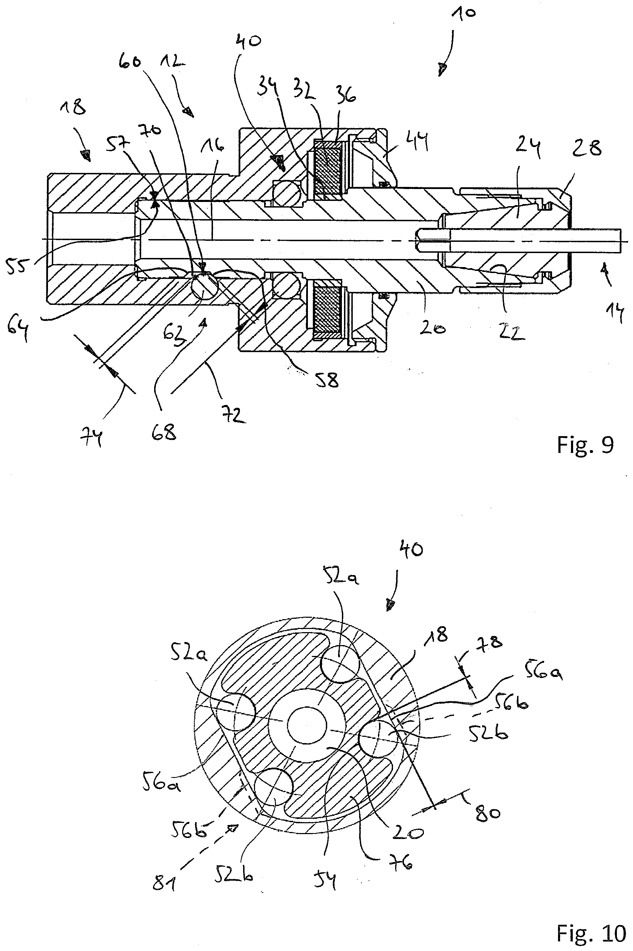

Eine in Figur 9 dargestellte Ausführungsform eines Werkzeugsystems 10 umfasst ein Spannfutter 12 und ein Gewindewerkzeug 14, wobei das Spannfutter 12 einen mit dem Spannfutter 12 gemäß Figuren 1 bis 6b vergleichbaren Aufbau hat und sich lediglich hinsichtlich der zweiten Überlasteinrichtung 68 von dem Spannfutter 12 gemäß Figuren 1 bis 6b unterscheidet.

Die zweite Überlasteinrichtung 68 umfasst einen in dem Antriebsabschnitt 18 fixierten Körper 63 mit einer kugelförmigen Übertragungsfläche 60, welche in einer Nut 70 des Antriebsabschnitts 20 aufgenommen ist.

Ein Querschnitt der Nut 70 ist in einer zu der Spannfutterachse 16 parallelen Richtung größer als ein Querschnitt des in die Nut 70 ragenden Abschnitts des Körpers 62. Die Nut 70 ist in zu der Spannfutterachse 16 paralleler Richtung zwischen einer ersten Übertragungsfläche 58 und einer zweiten Übertragungsfläche 64 begrenzt.

Ein erstes Spiel 72 zwischen der Übertragungsfläche 60 des Körpers 63 und der ersten Übertragungsfläche 58 des Einspannabschnitts 20 dient dazu, dass der Einspannabschnitt 20 bei Beanspruchung auf Druck in den Antriebsabschnitt 18 eintauchen kann, unter Verformung des Kunststoffelements 32. Wenn das erste Spiel 72 aufgebraucht ist, gelangt die Übertragungsfläche 60 des Körpers 63 in Anlage mit der ersten Übertragungsfläche 58 des Einspannabschnitts 20, sodass ein zusätzlicher Übertragungsweg zur Übertragung einer Axialkraft bereitgestellt ist, der über den Antriebsabschnitt 18, den Körper 63 und den Einspannabschnitt 20 verläuft.

Ein zweites Spiel 74 zwischen der Übertragungsfläche 60 des Körpers 63 und der zweiten Übertragungsfläche 64 des Einspannabschnitts 20 dient dazu, dass der Einspannabschnitt 20 auf Zug belastet aus dem Antriebsabschnitt 18 herausgezogen werden kann, unter Verformung des Kunststoffelements 32. Wenn das zweite Spiel 74 aufgebraucht ist, gelangt die Übertragungsfläche 60 des Körpers 63 in Anlage mit der zweiten Übertragungsfläche 64 des Einspannabschnitts 20, sodass ein zusätzlicher Übertragungsweg zur Übertragung einer Axialkraft bereitgestellt ist, der über den Antriebsabschnitt 18, den Körper 63 und den Einspannabschnitt 20 verläuft.

In Figur 10 ist eine alternative Ausführungsform einer ersten Überlasteinrichtung 40 dargestellt, welche bei einem Spannfutter 12 gemäß Figur 1 bis 6b oder bei einem Spannfutter 12 gemäß Figur 9 einsetzbar ist.

Die erste Überlasteinrichtung 40 gemäß Figur 10 weist kugelförmige Übertragungskörper 52a, 52b auf, welche in taschenförmigen Abtriebsflächen 54 angeordnet sind, die Teil einer Umfangsfläche eines Halters oder Käfigs 76 sind, der drehfest mit dem Einspannabschnitt 20 verbunden ist.

Im Normalbetrieb des Spannfutters 12 sind die Übertragungskörper 52a, 52b relativ zu den Abtriebsflächen 54 und zu einer Antriebsfläche 56a des Antriebsabschnitts 18 jeweils mit Spiel behaftet, vergleiche Bezugszeichen 78 und 80.

Dieses Spiel wird bei Überschreitung einer maximal zulässigen Verdrehung (welche mit einem vorgegebenen maximalen ersten Grenzdrehmoment korrespondiert) zwischen Einspannabschnitt 20 und Antriebsabschnitt 18 aufgelöst, sodass durch die erste Überlasteinrichtung 40 hindurch ein zusätzlicher Übertragungsweg bereitgestellt ist, sobald das Kunststoffelement 32 einen maximal zulässigen Verformungsweg (Verdrehverformung) erfährt.

Es ist denkbar, dass die Übertragungskörper 52a, 52b aus einem Metall hergestellt sind. Dies ist insbesondere bevorzugt, wenn die Überlasteinrichtung 40 als "letzte Stufe" des Spannfutters 12 für eine Übertragung von Drehmomenten von dem Antriebsabschnitt 18 auf den Einspannabschnitt 20 wirksam ist.

Es ist aber auch möglich, dass die Übertragungskörper 52a, 52b oder eine Teilmenge der Übertragungskörper 52a, 52b aus einem Kunststoffmaterial hergestellt sind oder zumindest einen Kunststoffmaterialabschnitt aufweisen. In diesem Fall bildet die Überlasteinrichtung 40 eine "zweite Stufe" für eine Übertragung von Drehmomenten von dem Antriebsabschnitt 18 auf den Einspannabschnitt 20, welche ihrerseits mit einer elastischen Verformung der Übertragungskörper 52a, 52b einhergeht.

Um einer plastischen Verformung eines Übertragungskörpers 52 vorzubeugen, ist es bevorzugt, dass eine Übertragungseinrichtung 81 vorgesehen ist, welche erst bei Überschreitung eines vorgegebenen maximalen zweiten Grenzdrehmoments wirksam ist. Zu diesem Zweck ist es möglich, dass bspw. nur die Übertragungskörper 52a aus Kunststoff hergestellt sind oder zumindest einen Kunststoffmaterialabschnitt aufweisen und für eine Übertragung von Drehmomenten wirksam sind, welche niedriger sind als das vorgegebene maximale zweite Grenzdrehmoment. Wird dieses zweite Grenzdrehmoment erreicht, gelangen metallische Übertragungskörper 52b in Anlage mit Antriebsflächen 56b, welche in Fig. 10 (als Alternative zu einem Verlauf der entsprechenden Abschnitte der Antriebsfläche 56a) gestrichelt dargestellt sind.

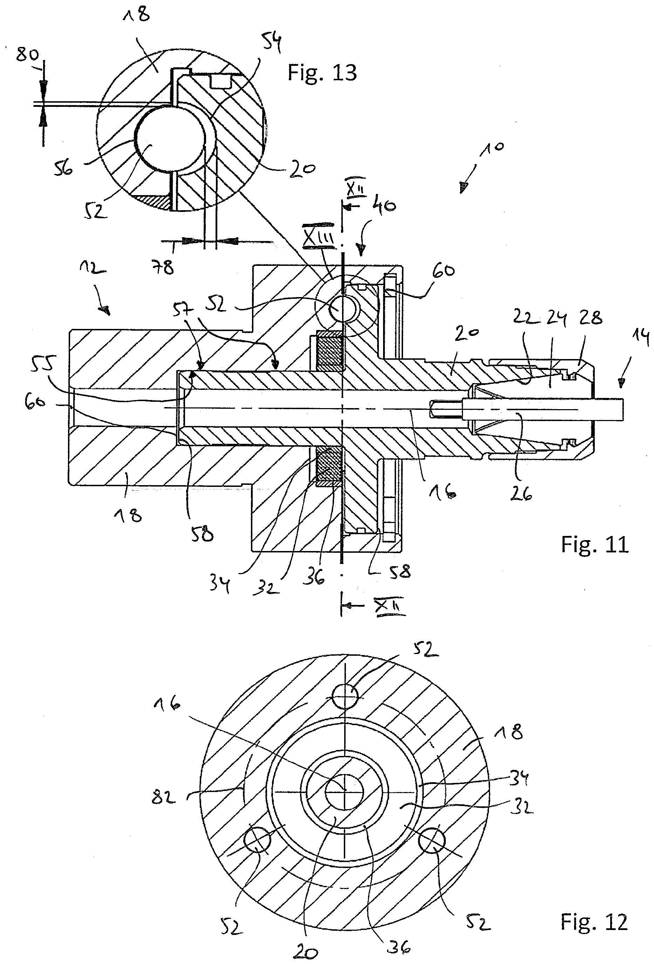

In den Figuren 11 bis 13 ist eine weitere Ausführungsform eines Spannfutters 12 dargestellt. Dieses weist eine erste Überlasteinrichtung 40 mit drei kugelförmigen Übertragungskörpern 52 auf. Diese sind mit Spiel 80 behaftet in taschenförmigen Antriebsflächen 56 des Antriebsabschnitts 18 aufgenommen.

Die Übertragungskörper 52 sind entlang eines Teilkreises 82 um die Spannfutterachse 16 herum regelmäßig verteilt angeordnet. Die Übertragungskörper 52 wirken mit ebenfalls taschenförmigen, im Normalbetrieb mit Spiel 78 beabstandeten Abtriebsflächen 54 des Einspannabschnitts 20 zusammen.

Für die Begrenzung des axialen Verformungswegs wird auf die Beschreibung zu der zweiten Überlasteinrichtung 68 des Spannfutters gemäß Figuren 1 bis 6b und insbesondere Figur 3 Bezug genommen, vergleiche auch Bezugszeichen 58 und 60 in Figur 11 linkerhand sowie Bezugszeichen 58 und 60 in Figur 11 rechterhand, wobei eine Übertragungsfläche 58 des Einspannabschnitts 20 abweichend von einem Ring 62 (siehe Fig. 3) durch einen Flansch des Einspannabschnitts 20 gebildet ist und wobei eine Übertragungsfläche 60 des Antriebsabschnitts 18 abweichend von der an dem Antriebsabschnitt 18 fixierten Abdeckung 44 (siehe Fig. 3) durch einen an dem Antriebsabschnitt 18 fixierten Spannring (ohne Bezugszeichen) gebildet ist.

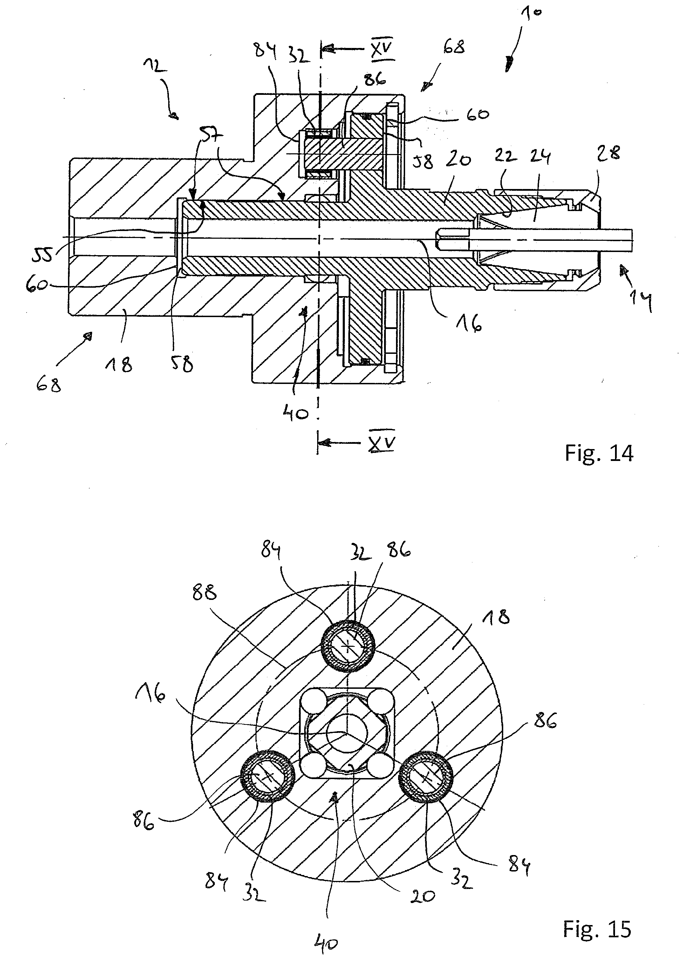

Eine in den Figuren 14 und 15 dargestellte Ausführungsform eines Werkzeugsystems 10 mit Spannfutter 12 und Gewindewerkzeug 14 unterscheidet sich von vorstehend beschriebenen Ausführungsformen dadurch, dass entlang eines Teilkreises 88 um die zentrale Spannfutterachse 16 herum verteilt angeordnet hohlzylindrische Ausnehmungen 84 vorgesehen sind, in welche zylindrische Stifte 86 eintauchen.

Bei dem dargestellten Ausführungsbeispiel sind die Ausnehmungen 84 dem Antriebsabschnitt 18 und die Stifte 86 dem Einspannabschnitt 20 zugeordnet. Die Zuordnung kann auch andersherum sein.

Die Ausnehmungen 84 und Stifte 86 wirken nicht unmittelbar miteinander zusammen, sondern über jeweils ringförmige Kunststoffelemente 32, welche ebenfalls entlang des Teilkreises 88 regelmäßig verteilt um die Spannfutterachse 16 angeordnet sind.

Die Kunststoffelemente 32 sind, gegebenenfalls unter Zwischenschaltung von Metallschichten (ohne Bezugszeichen) sowohl mit den Stiften 86 als auch mit den Ausnehmungen 84 verbunden.

Eine in den Antriebsabschnitt 18 eingeleitete Axialkraft wird somit über die Ausnehmungen 84 und die drei Kunststoffelemente 32 in die drei Stifte 86 eingeleitet, welche sich somit auf den Einspannabschnitt 20 überträgt.

Ein in den Antriebsabschnitt 18 eingeleitetes Drehmoment wird ebenfalls über die Ausnehmungen 84 und die Kunststoffelemente 32 auf die Stifte 86 und somit auf den Einspannabschnitt 20 übertragen.

Auch das Spannfutter 12 gemäß Figuren 14 und 15 weist eine erste Überlasteinrichtung 40 auf, welche bei einer maximal zulässigen Verdrehverformung der Kunststoffelemente 32 wirksam ist, sowie eine zweite Überlasteinrichtung 68, welche in axialer Richtung wirksam ist und deren Funktionsweise bereits vorstehend unter Bezugnahmen beispielsweise auf Figuren 3 und 11 erläutert wurde.

## Patentansprüche

1. Spannfutter (12) zum Spannen eines Gewindewerkzeugs (14) in einer Werkzeugmaschine, wobei das Spannfutter (12) einen von einer Werkzeugmaschine antreibbaren Antriebsabschnitt (18) und einen Einspannabschnitt (20) zum Einspannen eines Schafts (26) des Gewindewerkzeugs (14) aufweist, wobei sich das Spannfutter (12) entlang einer zentralen Spannfutterachse (16) erstreckt, **dadurch gekennzeichnet, dass** der Antriebsabschnitt (18) und der Einspannabschnitt (20) voneinander separat bereitgestellt und mittels mindestens eines Kunststoffelements (32) miteinander verbunden sind, das für eine Übertragung sowohl von parallel zu der Spannfutterachse (16) wirkenden Axialkräften zwischen Antriebsabschnitt (18) und Einspannabschnitt (20) als auch für eine Übertragung von um die Spannfutterachse (16) herum anliegenden Drehmomenten zwischen Antriebsabschnitt (18) und Einspannabschnitt (20) wirksam ist.

2. Spannfutter (12) nach Anspruch 1, **dadurch gekennzeichnet, dass** eine Übertragung der Axialkräfte und der Drehmomente von dem Antriebsabschnitt (18) auf den Einspannabschnitt (20) ausschließlich durch das mindestens eine Kunststoffelement (32) hindurch erfolgt.

3. Spannfutter (12) nach einem der voranstehenden Ansprüche, **dadurch gekennzeichnet, dass** das mindestens eine Kunststoffelement (32) ringförmig, insbesondere hohlzylindrisch ist und/oder dass sich eine zentrale Achse (66) des mindestens einen Kunststoffelements (32) koaxial zu der Spannfutterachse (16) erstreckt.

4. Spannfutter (12) nach einem der voranstehenden Ansprüche, **dadurch gekennzeichnet, dass** zur Übertragung der Axialkräfte und der Drehmomente mehrere Kunststoffelemente (32) vorgesehen sind, welche vorzugsweise entlang eines Teilkreises (88) um die Spannfutterachse (16) verteilt angeordnet sind, insbesondere regelmäßig verteilt angeordnet sind.

5. Spannfutter (12) nach einem der vorstehenden Ansprüche, **dadurch gekennzeichnet, dass** das mindestens eine Kunststoffelement (32) eine erste Verbindungsfläche (46) zur Verbindung mit einer ersten Metallschicht (34) aufweist, welche mit dem Antriebsabschnitt oder mit dem Einspannabschnitt (20) verbunden ist und/oder dass das mindestens eine Kunststoffelement (32) eine zweite Verbindungsfläche (48) zur Verbindung mit einer zweiten Metallschicht (36) aufweist, welche mit dem Einspannabschnitt oder mit dem Antriebsabschnitt (18) verbunden ist.

6. Spannfutter (12) nach Anspruch 5, dass die Verbindung des mindestens einen Kunststoffelements (32) zu der ersten Metallschicht (34) und/oder zu der zweiten Metallschicht (36) durch Vulkanisation hergestellt ist.

7. Spannfutter (12) nach Anspruch 5 oder 6, dass eine Verbindung zwischen einer der Metallschichten (36) und dem Antriebsabschnitt (18) und/oder zwischen einer der Metallschichten (34) und dem Einspannabschnitt (20) durch eine Kleb- oder Pressverbindung hergestellt ist.

8. Spannfutter (12) nach einem der vorstehenden Ansprüche, **dadurch gekennzeichnet, dass** ein Normalbetrieb des Spannfutters (12) damit korreliert, dass das mindestens eine Kunststoffelement (32) bei Übertragung von Axialkräften und Drehmomenten ausschließlich elastisch verformt wird, wobei vorzugsweise der Normalbetrieb mit der Übertragung von Drehmomenten bis zu einem vorgegebenen ersten maximalen Grenzdrehmoment korreliert.

9. Spannfutter (12) nach Anspruch 8, **dadurch gekennzeichnet, dass** eine Überlasteinrichtung (40, 68) vorgesehen ist, welche in dem Normalbetrieb des Spannfutters (12) inaktiv ist und erst bei Überschreitung eines vorgegebenen maximalen Verformungswegs des mindestens einen Kunststoffelements (32) und/oder bei Überschreitung des ersten maximalen Grenzdrehmoments aktivierbar ist und - dem maximal verformten Kunststoffelement (32) überlagert - einen zusätzlichen Übertragungsweg zur Übertragung einer Axialkraft und/oder eines Drehmoments zwischen Antriebsabschnitt (18) und Einspannabschnitt (20) bereitstellt.

10. Spannfutter (12) nach Anspruch 9, **dadurch gekennzeichnet, dass** die Überlasteinrichtung (68) mindestens eine dem Antriebsabschnitt (18) zugeordnete Übertragungsfläche (60) und mindestens eine dem Einspannabschnitt (20) zugeordnete Übertragungsfläche (58, 64) aufweist, welche im Normalbetrieb zueinander beabstandet sind und welche erst bei Überschreitung des vorgegebenen maximalen Verformungswegs des mindestens einen Kunststoffelements (32) in eine kraftschlüssige Anlage miteinander gelangen.

11. Spannfutter (12) nach Anspruch 9 oder 10, **dadurch gekennzeichnet, dass** die Überlasteinrichtung (40) mindestens einen Übertragungskörper (52) aufweist, der im Normalbetrieb zu einer Antriebsfläche (56) und/oder zu einer Abtriebsfläche (54) beabstandet ist und der erst bei Überschreitung des vorgegebenen maximalen Verformungswegs des mindestens einen Kunststoffelements (32) in eine kraftschlüssige Anlage mit der Antriebsfläche (56) und mit der Abtriebsfläche (54) gelangt.

12. Spannfutter (12) nach Anspruch 11, **dadurch gekennzeichnet, dass** der mindestens eine Übertragungskörper (52) aus einem Kunststoffmaterial hergestellt ist oder zumindest einen Kunststoffmaterialabschnitt aufweist.

13. Spannfutter (12) nach Anspruch 12, **dadurch gekennzeichnet, dass** der mindestens eine Übertragungskörper (52) bis zu einem vorgebbaren maximalen zweiten Grenzdrehmoment elastisch verformbar ist und dass der Überlasteinrichtung (40) eine Übertragungseinrichtung (81) nachgeschaltet ist, welche bei Überschreitung des maximalen zweiten Grenzdrehmoments zur Übertragung eines Drehmoments von dem Antriebsabschnitt (18) auf den Einspannabschnitt (20) wirksam ist.

14. Spannfutter (12) nach einem der Ansprüche 9 bis 13, **dadurch gekennzeichnet, dass** der Verformungsweg des mindestens einen Kunststoffelements (32) eine zu der Spannfutterachse (16) parallele Axialverformung und/oder eine Verdrehverformung betrifft.

15. Spannfutter nach einem der vorstehenden Ansprüche, **dadurch gekennzeichnet, dass** der Antriebsabschnitt (18) einen nach radial innen weisenden Führungsabschnitt (55) zur Führung eines nach radial außen weisenden Führungsabschnitts (57) des Einspannabschnitts (20) aufweist.
